# EUROPÄISCHE PATENTSCHRIFT

(11) **EP 1 056 032 B1**
(45) Veröffentlichungstag und Bekanntmachung des Hinweises auf die Patenterteilung: **24.03.2004**
(21) Anmeldenummer: 00101479.4
(22) Anmeldetag: 26.01.2000
(51) Int. Cl.: G06K 7/00

(54) **Chipkartenleser**
Chip card reader
Lecteur de carte à puce

(30) Priorität: 28.05.1999 DE 29909222 U
(43) Veröffentlichungstag der Anmeldung: 29.11.2000
(73) Patentinhaber: Stocko Contact GmbH & Co. KG, 42327 Wuppertal (DE)
(72) Erfinder: Klatt, Dieter, 42489 Wülfrath (DE); Bäcker, Arnd, 53940 Hellenthal (DE)
(74) Vertreter: Stenger, Watzke & Ring Patentanwälte

(56) Entgegenhaltungen:
- DE-U- 29 722 142

## Beschreibung

Die Erfindung betrifft eine Kontaktiereinheit für ein kartenförmiges Trägerelement elektronischer Baugruppen, insbesondere für ISO 7816 Chipkarten, mit einem steckkartenförmigen Gehäuse, das eine Basisplatte und eine in Querrichtung deckungsgleiche Abdeckplatte aufweist, zwischen denen ein an einer Stirnseite des Gehäuses mündender, schlitzartiger Einschubkanal für die Aufnahme **des kartenförmigen Trägerelements, insbesondere** der Chipkarte, ausgebildet ist, und das an der dieser gegenüberliegenden Stirnseite mit einer Steckverbinderleiste, insbesondere nach PCMCIA-Norm versehen ist, und mit einer parallel zum Einschubkanal im Gehäuse angeordneten Leiterplatte, die elektrisch mit der Steckverbinderleiste verbunden und an ihrer Oberfläche mit einem Kontaktfeld für die Kontaktierung **des kartenförmigen Trägerelemerits, insbesondere** der Chipkarte, versehen ist.

Chipkartenleser dieser Art sind beispielsweise in dem deutschen Gebrauchsmuster DE 298 11 425 U1 beschrieben. Sie werden über die Steckverbinderleiste, insbesondere nach PCMCIA-Norm, an Datenverarbeitungssysteme, beispielsweise Notebooks, angeschlossen und dienen dort der Auswertung von Daten oder der Durchführung von Anwendungen, wie beispielsweise der Öffnung der Zugangsberechtigung zu Datennetzen, der Ausführung von Homebanking oder auch zur Speichererweiterung, Telefonnutzung und dergleichen. Eine weitere Anwendung derartiger Chipkartenleser ist als Common Interface in Verbindung mit dem digitalen Fernsehen gegeben. Für alle Notebook-Applikationen wird eine kurze Version von Lesegeräten, insbesondere nach PCMCIA-Typ II, eingesetzt, die im Einschubschacht des Notebooks in vollem Umfange versenkbar ist, ohne dass die Mobilität und Handhabung störende herausragende Teile in eingesetzten Zustand vorhanden sind. Dagegen wird bei Digital TV Applikationer eine verlängerte Version der Lesegeräte verwendet, bei denen das Gehäuse im hinteren Bereich, also an der der Steckverbinderleiste gegenüberliegenden Stirnseite, mit einer Verlängerung versehen ist, die sowohl dazu dient, die einzuset. zende Chipkarte zu führen als auch die Handhabung des Lesegeräts zu erleichtern. **Ein derartiges Lesegerät ist beispielsweise seitens der DE 297 22 142 U1 im Zusammenhang mit Fig. 3 der DE 297 22 142 U1 offenbart.** Der Verlängerungsbereich stellt eine Art vorgelagerter Führung für die Chipkarte dar und stabilisiert den Chipkartenleser mechanisch für die stark beanspruchenden Betriebsbedingungen auf dem Consumermarkt. Ein Einsatz solcher Lesegeräte mit in der Betriebsstellung aus dem Modulaufnahmeschlitz des Computers herausragenden Erweiterung verbietet sich beispielsweise an Notebooks, da dort die Gefahr besteht, dass in der mobilen Handhabung die Kontaktiersicherheit beeinträchtigt wird und Transportprobleme auftreten.

Es besteht damit die Notwendigkeit, je nach Einsatzbereich kurzbauende Lesegeräte für Notebooks und dergleichen mobile Einsätze zur Verfügung zu stellen und die Langversion mit Erweiterungsbereich im stationären Einsatz, z. B. in Digital TV Applikationen zu verwenden. Für die Herstellung stellen diese Anforderungen eine erhebliche Erschwernis dar, da für die unterschiedlichen Geräte differierende Herstellungsverfahren und Maschinen angewendet werden müssen und darüber hinaus die gesamte Logistik und Lagerhaltung verkompliziert wird.

Der Erfindung liegt die **Aufgabe** zugrunde, eine Kontaktiereinheit der eingangs genannten Art dergestalt zu verbessern, dass sich aus einem Herstellungsprozeß heraus sowohl die Kurzversion als auch die Langversion der Lesegeräte produzieren lassen.

Die Aufgabe ist erfindungsgemäß an einer Kontaktiereinheit der eingangs genannten Art, die eine Kurzversion ohne die Gehäuseerweiterung darstellt, durch die Merkmale der Ansprüche gelöst, die gegen DE 297 22 142 abgegrenzt sind. Für besondere Anwendungsfälle kann auch eine obere Abdeckung des ansonsten offen U-förmigen Ansatzsteils vorgesehen sein.

Durch die Kombination der an sich bekannten Kurzversion des Chipkartenlesegeräts mit einem über die Sollbruchlinie wahlweise abtrennbaren Ansatz einer dem jeweiligen Anwendungszweck entsprechenden Formgebung, also unterlippenartig oder U-förmig oder kastenförmig, wird die Möglichkeit gegeben, in einem einzigen Herstellungsprozeß entweder die Kurzversion (für den Notebook-Einsatz) oder die Extendedversion (für das Digitale TV an Set Top Boxen) herzustellen, indem einfach von der Abtrennmöglichkeit des Extendedbereichs Gebrauch gemacht wird (für Notebook-Applikationen) oder nicht (für digitales TV).

Vorzugsweise ist die Verbindung der Basisplatte mit der Abdeckplatte im Bereich der Steckverbinderleiste vorgenommen und kann beispielsweise über Schweißlaschen, Ultraschallverschweißung, Verklebung oder Verschraubung erfolgen. Dabei ist vorzugsweise der Einschubkanal über seine gesamte Länge in Einschubrichtung der Chipkarte beidseitig durchgehend offen und ist die Basisplatte mit der Abdeckplatte ausschließlich im Bereich der Steckverbinderleiste derart verbunden, daß zwischen der Basisplatte und der Abdeckplatte eine Vorspannung vorgesehen ist. Auf diese Weise wird mit dem Einschieben der Chipkarte eine geringe Verschwenkbewegung zwischen Basisplatte und Abdeckplatte gegen die Wirkung der Rückstellkraft vorgenommen. Diese Ausführungsform bietet sowohl in der Kurzversion als auch in der Langversion den Vorteil, daß sich die Chipkarte im Lesegerät beim Einschieben in den Einschubkanal klemmend halten läßt, wobei eine hohe Formstabilität der Kontaktiereinheit und Kompensation fertigungsbedingter Toleranzen erzielt wird. Bei den bisher bekannten Langversionen von Kontakiereinheiten ist diese vorteilhafte Maßnahme nicht vornehmbar.

Gemäß einer weiteren Ausgestaltung der Erfindung kann es vorteilhaft sein, den Ansatz mit der Basisplatte über eine oder mehrere Sollbruchstellen zu verbinden. Auch kann es zweckmäßig sein, den durch den Ansatz gebildeten Erweiterungsbereich aus Teilsegmenten aufzubauen, die je nach Formgebung herausgetrennt werden können.

Gemäß einer weiteren Ausgestaltung der Erfindung ist der Ansatz und/oder sind die seitlichen Führungsstege mit Durchbrüchen und/oder Rastelementen versehen, die auch vorgesehen sein können, eine zusätzliche oder nachträgliche Aufnahme von weiteren elektrischen Modulen in der Langversion zu ermöglichen, wobei eine elektrische Verbindung zur Leiterplatte vorgesehen ist Solche Module können Speichererweiterungen, Adapter für kleinere Speicherkarten (z. B. SIM Karte, Mulitmedia Card, Compact Flash Card, Smart Media Card usw.), Fax/Modem, ISDN, ADSL oder LWL Übertragung sowie Anschlußmöglichkeiten für Eingabegeräte, z. B. eine Tastatur oder biometrische Eingabegeräte beinhalten.

Weitere Einzelheiten, Merkmale und Vorteile des Gegenstandes der Erfindung ergeben sich aus der nachfolgenden Beschreibung der zugehörigen Zeichnung, in der verschiedene Ausführungsformen einer erfindungsgemäßen Kontaktiereinheit schematisch dargestellt sind. In der Zeichnung zeigt:
- Fig. 1: eine perspektivische Darstellung einer Kontaktiereinheit als Langversion,
- Fig. 2: eine perspektivische Darstellung einer geänderten Kontaktiereinheit mit U-förmigem Ansatz,
- Fig. 3: eine geänderte Ausführungsform der Langversion einer Kontaktiereinheit in perspektivischer Darstellung,
- Fig. 4: eine geänderte Ausführungsform in perspektivischer Darstellung und
- Fig. 5: ein zusätzliches elektrisches Modul in perspektivischer Darstellung, welches mit einer entsprechend vorbereiteten Langversion der Kontaktiereinheit einsetzbar ist.

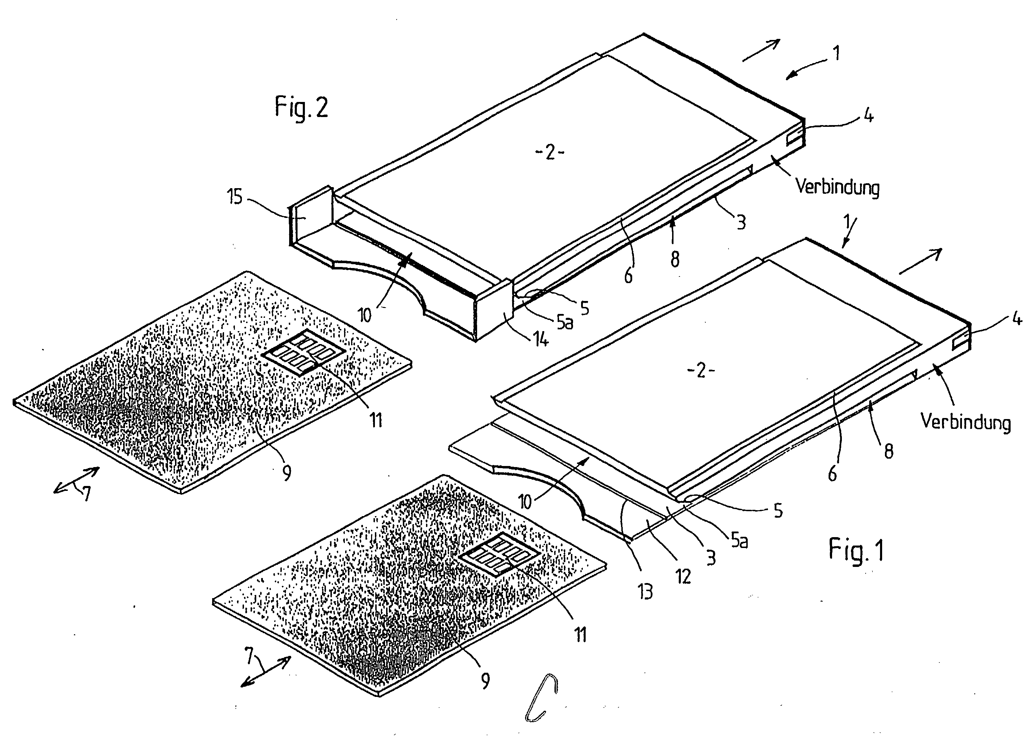

Das in Fig. 1 dargestellte Ausführungsbeispiel der Erfindung zeigt eine als Chipkartenleser ausgebildete Kontaktiereinheit 1, die vorgesehen ist, über eine normgemäße PCMCIA-Schnittstelle mit einer Set Top Box für das digitale Fernsehen (nicht dargestellt) kontaktiert zu werden. Die Kontaktiereinheit 1 besteht aus einem zweischaligen Außengehäuse 2 mit einer Basisplatte 3, einem PCMCIA-Anschlußfeld in Form einer Steckverbinderleiste 4 mit 68 Polen an dem in Einschubrichtung in die Set Top Box gemäß Pfeil vorderen Ende, mit einer oberen und einer unteren Einschubführung 5, 5a am gegenüberliegenden Ende für die Einführung einer ISO 7816 Chipkarte 9 und einer parallel mit Abstand zur Basisplatte 3 sich erstreckenden Abdeckplatte 6, welche mit der Basisplatte 3 im Bereich der Steckverbinderleiste 4 (siehe Pfeil) starr verbunden ist. Im Inneren des Gehäuses 2 ist mit Abstand parallel zur Basisplatte eine in der Zeichnung nicht erkennbare Leiterplatte angeordnet derart, daß dazwischen ein Einschubkanal 8 für die ISO 7816 Chipkarte 9 gebildet wird, die über einen zwischen den Einschubführungen 5, 5a verlaufenden Einschubschlitz 10 in die Kontaktiereinheit 1 einschiebbar ist. Die Chipkarte 9 läßt sich in Richtung des in Fig. 1 gezeigten Doppelpfeils 7 in die Kontaktiereinheit 1 einschieben und aus dieser wieder herausziehen, wobei sich über das auf der Oberfläche angeordnete Chipfeld 11 der Chipkarte 9 und ein inneres Kontaktfeld (nicht erkennbar) auf der Unterseite der Leiterplatte eine Kontaktierung vornehmen läßt, die eine Verarbeitung der Chipkarte 9 ermöglicht, wenn die Kontaktiereinheit 1 in den Einschubschlitz der Set Top Box eingesetzt und mit dessen PCMCIA-Schnittstelle über die Steckverbinderleiste 4 verbunden ist.

Aus der Zeichnung ist erkennbar, daß der Einschubkanal 8 über seine gesamte Länge in Einschubrichtung der Chipkarte beidseitig durchgehend offen ist und daß die Basisplatte 3 mit der Abdeckplatte 6 ausschließlich im Bereich der Steckverbinderleiste (Verbindungsbereich durch Pfeil gekennzeichnet) verbunden ist. Die Verbindung ist dabei derart ausgestaltet, daß zwischen der Basisplatte 3 und der Abdeckplatte 6 eine Vorspannung vorgesehen ist, die dazu führt, daß bei nicht eingeschobener Chipkarte 9 der Einschubkanal 8 sich zum Einschubschlitz 10 hin verengt. Wird nun die Chipkarte 9 in den Einschubkanal 8 eingeschoben erzwingt sie gegen die Wirkung der Vorspannung eine geringe Verschwenkbewegung der Abdeckplatte 6 nach oben, so daß eine Klemmfunktion für die Chipkarte 9 erzielt ist.

Die Basisplatte 3 der Kontaktiereinheit 1 ist durch einen flachen, unterlippenartigen Ansatz 12 verlängert, der mit der Basisplatte 3 über eine Sollbruchlinie 13 verbunden ist. Es ist erkennbar, daß durch diese Maßnahme aus einem einzigen Herstellungsprozeß heraus sowohl eine Kurzversion der Kontaktiereinheit als auch eine Langversion der Kontaktiereinheit 1 herstellbar ist, indem entweder der Ansatz 12 unter Nutzung der Sollbruchlinie 13 zur Herstellung einer Kurzversion weggebrochen wird oder zur Herstellung einer Langversion belassen wird. Dabei kann zur Verbesserung der Führung für die Chipkarte 9 gemäß Fig. 2 der Zeichnung eine U-förmige Ausbildung des Ansatzes vorgenommen werden, indem der Ansatz 12 mit seitlichen Führungsstegen 14, 15 versehen wird. Es wird darauf hingewiesen, daß die seitlichen Führungsstege 14, 15 ausschließlich mit dem Ansatz 12 verbunden sind und mit diesem durch Wegbrechen zur Herstellung einer Kurzversion entfembar sind.

Die Beschreibung verdeutlicht, daß die erläuterte Gehäusekonzeption die Möglichkeit bietet, einen in Extendedversion hergestellten Chipkartenleser, wie er für das digitale Fernsehen unter anderem für Set Top Boxen Verwendung findet, durch Abtrennen des Extendedbereichs, respektive Ansatzes 12, gegebenenfalls gemeinsam mit den seitlichen Führungsstegen 14, 15 zur Kurzversion umzugestalten, die insbesondere für Notebook-Applikationen verwendet werden kann.

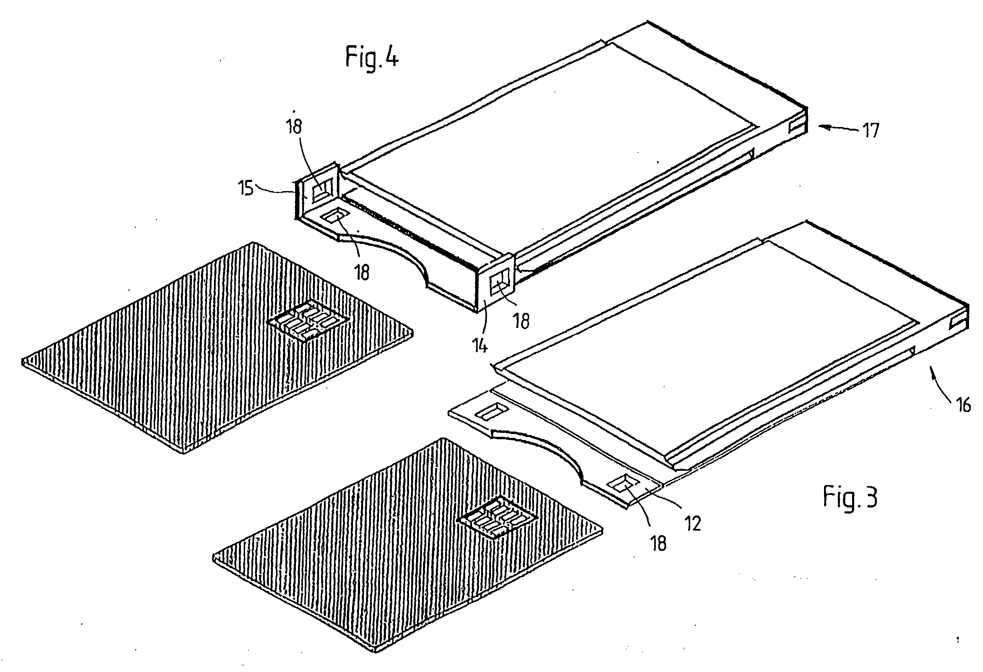

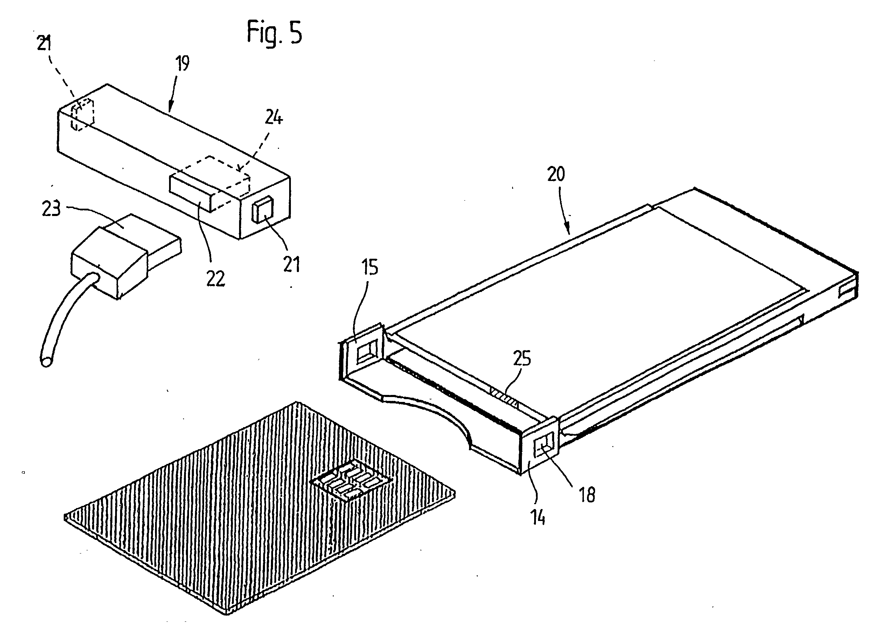

Die in Fig. 3 und 4 dargestellte Ausführungsform eines Chipkartenlesers 16 bzw. 17 unterscheidet sich von den vorbeschriebenen der Fig. 1 und 2 dadurch, daß der Ansatz 12 und/oder die seitlichen Führungsstege 14, 15 mit Durchbrüchen 18 versehen sind, in die Rastelemente eingreifen können, die vorgesehen sein können, eine zusätzliche Aufnahme von weiteren elektrischen Modulen in der Langversion zu ermöglichen.

Ein derartiges Modul 19 ist in Fig. 5 der Zeichnung perspektivisch schematisch dargestellt. Das im wesentlichen prismatische Modul 19 weist Abmessungen auf, die dem freien Innenraum des Ansatzes 12 mit seitlichen Führungsstegen 14, 15 entsprechen und ist mit Rastvorsprüngen 21 seitlich versehen. Das Modul 19 trägt ein Steckbuchsenteil 22 zum Anschluß eines Steckers 23 und weist vorderseitig eine Kontaktfläche 24 auf, die mit einer korrespondierenden Kontaktfläche 25 des zugehörigen Chipkartenlesers 20 zusammenwirkt, wenn das Modul 19 eingesetzt und mit den Durchbrüchen 18 der seitlichen Führungsstege 14, 15 verrastet ist.

### Bezugszeichenliste

- 1: Kontaktiereinheit
- 2: Außengehäuse
- 3: Basisplatte
- 4: Steckverbinderleiste
- 5: Einschubführung
- 5a: Einschubführung
- 6: Abdeckplatte
- 7: Doppelpfeil
- 8: Einschubkanal
- 9: Chipkarte
- 10: Einschubschlitz
- 11: Chipfeld
- 12: Ansatz
- 13: Sollbruchlinie
- 14: Führungssteg
- 15: Führungssteg
- 16: Chipkartenleser
- 17: Chipkartenleser
- 18: Durchbruch
- 19: Modul
- 20: Chipkartenleser
- 21: Rastvorsprung
- 22: Steckbuchsenteil
- 23: Stecker
- 24: Kontaktfläche
- 25: Kontaktfläche

## Patentansprüche

1. Kontaktiereinheit für ein kartenförmiges Trägerelement elektronischer Baugruppen, insbesondere für ISO 7816 Chipkarten (9), mit einem steckkartenförmigen Gehäuse (2), das eine Basisplatte (3) und eine Abdeckplatte (6) aufweist, zwischen denen ein
an einer ersten Stirnseite des Gehäuses (2) mündender schlitzartiger Einschubkanal (8) für die Aufnahme **des kartenförmigen Trägerelements** (9) ausgebildet ist, wobei das Gehäuse an der dieser ersten Stirnseite gegenüberliegenden
zweiten Stirnseite mit einer Steckverbinderleiste (4), insbesondere nach PCMCIA-Norm, versehen ist, und mit einer parallel zum Einschubkanal (8) im Gehäuse (2) angeordneten Leiterplatte, die elektrisch mit der Steckverbinderleiste (4) verbunden ist und an ihrer Oberfläche mit einem Kontaktfeld für die Kontaktierung **des kartenförmigen Trägerelements, insbesondere** der Chipkarte (9), versehen ist,
**dadurch gekennzeichnet,**
**dass** ausschließlich die Basisplatte (3) **auf der** ersten Stirnseite mit einem flachen, unterlippenartigen Ansatz (12) verlängert ist, der mit der Basisplatte (3) über eine Sollbruchlinie (13) verbunden ist.

2. Kontaktiereinheit nach Anspruch 1, **dadurch gekennzeichnet, dass** der Ansatz (12) U-förmig, das heisst mit seitlichen Führungsstegen (14, 15) ausgestaltet ist.

3. Kontaktiereinheit nach Anspruch 2, **gekennzeichnet durch** eine obere Abdeckung des U-förmigen Ansatzes.

4. Kontaktiereinheit nach einem der Ansprüche 1 bis 3, **dadurch gekennzeichnet, dass** die Basisplatte (3) mit der Abdeckplatte (6) im Bereich der Steckverbinderleiste (4) verbunden ist.

5. Kontaktiereinheit nach einem der Ansprüche 1 bis 4, **dadurch gekennzeichnet, dass** der Einschubkanal (8) über seine gesamte Länge in Einschubrichtung **des kartenförmigen Trägerelements, insbesondere** der Chipkarte (9), beidseitig durchgehend offen ist und dass die Basisplatte (3) mit der Abdeckplatte (6) ausschließlich im Bereich der Steckverbinderleiste (4) derart verbunden ist, dass zwischen der Basisplatte (3) und der Abdeckplatte (6) eine Vorspannung gegeben ist.

6. Kontaktiereinheit nach einem der Ansprüche 1 bis 5, **dadurch gekennzeichnet, dass** der Ansatz (12) mit der Basisplatte (3) über eine oder mehrere Sollbruchstellen verbunden ist.

7. Kontaktiereinheit nach einem der Ansprüche 1 bis 6, **dadurch gekennzeichnet, dass** der durch den Ansatz (12) gebildete Erweiterungsbereich aus Teilsegmenten aufgebaut ist, die separat von der Basisplatte (3) abtrennbar sind.

8. Kontaktiereinheit nach einem der Ansprüche 1 bis 7, **dadurch gekennzeichnet, dass** der Ansatz (12) und/oder die seitlichen Führungsstege (14, 15) mit Durchbrüchen (18) und/oder Rastelementen versehen sind.

9. Kontaktiereinheit nach Anspruch 8, **gekennzeichnet durch** eine zusätzliche Aufnahme eines oder mehrerer elektrischer Module (19), wobei eine elektrische Verbindung (24/25) zur Leiterplatte vorgesehen ist.

## Claims

1. Contacting unit for a card-shaped carrier element for electronic modules, in particular for ISO 7816 chip cards (9), having an insert card-shaped housing (2) with a base plate (3) and a cover plate (6), between which a slot-shaped insertion channel (8) designed to accept the card-shaped carrier element (9) is formed that opens into a first end face of the housing (2), where the housing is provided at a second end face opposite to the first end face with a pin-and-socket connector strip (4), in particular in accordance with PCMCIA Standard, and with a circuit board, which is electrically connected to the pin-and-socket connector strip (4) and disposed in parallel with the insertion channel (8) within the housing (2) and which has a contact field on its surface for making contact with the card-shaped carrier element, in particular the chip card (9),
**characterised in that** only the base plate (3) is extended on the first end face with a shallow, bottom-lip shaped tab (12) that is connected with the base plate (3) via a break-off line (13).

2. Contacting unit according to Claim 1, **characterised in that** the tab (12) is U-shaped, i.e. it is provided with lateral web guides (14, 15).

3. Contacting unit according to Claim 2, **characterised by** a top cover of the U-shaped tab.

4. Contacting unit according to one of claims 1 to 3, **characterised in that** the base plate (3) is connected with the cover plate (6) in the area of the pin-and-socket connector strip (4).

5. Contacting unit according to one of Claims 1 to 4, **characterised in that** the insertion channel (8) is open right through on both sides over its entire length in the direction of insertion of the card-shaped carrier element, in particular the chip card (9) and that the base plate (3) is connected with the cover plate (6) in the area of the pin-and-socket connector strip (4) only and in such a manner that a preloading is produced between the base plate (3) and the cover plate (6).

6. Contacting unit according to one of Claims 1 to 5, **characterised in that** the tab (12) is connected with the base plate (3) by one or several break-off points.

7. Contacting unit according to one of Claims 1 to 6, **characterised in that** the extension area formed by the tab (12) is made of part segments which may be detached separately from the base plate (3).

8. Contacting unit according to one of Claims 1 to 7, **characterised in that** the tab (12) and/or the lateral web guides (14, 15) are provided with openings (18) and/or detents.

9. Contacting unit according to Claim 8, **characterised by** an additional receptacle for one or several electric modules (19), where an electrical connection (24, 25) with the circuit board is provided.

## Revendications

1. Unité de mise en contact pour élément porteur d'ensembles électroniques en forme de carte, notamment pour cartes à puce (9) ISO 7816, laquelle comporte, d'une part, un boîtier en forme de carte (2) comprenant une plaque de base (3) et une plaque de recouvrement (6) entre lesquelles est réalisé un canal d'insertion (8) en forme de fente débouchant au niveau d'une première face frontale du boîtier (2) et servant à recevoir l'élément porteur en forme de carte (9), le boîtier étant pourvu, sur la deuxième face frontale opposée à ladite première face frontale, d'une barrette de connexion multibroche (4) réalisée notamment selon la norme PCMCIA, et, d'autre part, une plaquette à circuit imprimé, disposée dans le boîtier (2) parallèlement au canal d'insertion (8), qui est reliée électriquement à la barrette de connexion multibroche (4) et est pourvue, à sa surface, d'une aire de contact servant à la mise en contact de l'élément porteur en forme de carte, notamment la carte à puce (9), **caractérisée en ce que** seule la plaque de base (3) est prolongée, du côté de la première face frontale, par une saillie plate en forme de lèvre inférieure (12) qui est reliée à la plaque de base (3) par l'intermédiaire d'une ligne de rupture (13).

2. Unité de mise en contact selon la revendication 1, **caractérisée en ce que** la saillie (12) est agencée en forme de U, c'est-à-dire avec des réglettes latérales de guidage (14, 15).

3. Unité de mise en contact selon la revendication 2, **caractérisée par** un couvercle supérieur de la saillie en forme de U.

4. Unité de mise en contact selon l'une des revendications 1 à 3, **caractérisée en ce que** la plaque de base (3) est reliée à la plaque de recouvrement (6) dans la zone de la barrette de connexion multibroche (4).

5. Unité de mise en contact selon l'une des revendications 1 à 4, **caractérisée en ce que** le canal d'insertion (8) est complètement ouvert des deux côtés sur sa toute longueur dans la direction d'insertion de l'élément porteur en forme de carte, notamment de la carte à puce (9), et **en ce que** la plaque de base (3) est reliée à la plaque de recouvrement (6) exclusivement dans la zone de la barrette de connexion multibroche (4) de sorte qu'il y ait une précontrainte entre la plaque de base (3) et la plaque de recouvrement (6).

6. Unité de mise en contact selon l'une des revendications 1 à 5, **caractérisée en ce que** la saillie (12) est reliée à la plaque de base (3) par l'intermédiaire d'un ou plusieurs points de rupture.

7. Unité de mise en contact selon l'une des revendications 1 à 6, **caractérisée en ce que** la zone d'extension formée par la saillie (12) est constituée de segments qui peuvent être séparément détachés de la plaque de base (3).

8. Unité de mise en contact selon l'une des revendications 1 à 7, **caractérisée en ce que** la saillie (12) et/ou les réglettes latérales de guidage (14, 15) sont pourvues d'ajours (18) et/ou d'éléments d'encliquetage.

9. Unité de mise en contact selon la revendication 8, **caractérisée par** un dispositif de réception supplémentaire d'un ou plusieurs modules électriques (19), une liaison électrique (24/25) étant prévue avec la plaquette à circuit imprimé.
